(19) Europäisches Patentamt
European Patent Office
Office européen des brevets

(11)  EP 2 452 157 B1

(12)  **FASCICULE DE BREVET EUROPEEN**

(45) Date de publication et mention
de la délivrance du brevet:
**04.09.2013   Bulletin 2013/36**

(21) Numéro de dépôt: **10730462.8**

(22) Date de dépôt: **09.07.2010**

(51) Int Cl.:
*G01C 21/16* (2006.01)        *G01S 19/40* (2010.01)
*G01S 19/47* (2010.01)

(86) Numéro de dépôt international:
**PCT/EP2010/059853**

(87) Numéro de publication internationale:
**WO 2011/003993 (13.01.2011 Gazette 2011/02)**

(54) **PROCEDE DE DETERMINATION DE PARAMETRES DE NAVIGATION D'UN PORTEUR ET DISPOSITIF D'HYBRIDATION ASSOCIE**

VERFAHREN ZUR DEFINITION VON NAVIGATIONSPARAMETERN FÜR EINEN TRÄGER UND HYBRIDISIERUNGSVORRICHTUNG

METHOD OF DETERMINING NAVIGATION PARAMETERS FOR A CARRIER AND HYBRIDIZATION DEVICE

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité:  **10.07.2009   FR 0954850**

(43) Date de publication de la demande:
**16.05.2012   Bulletin 2012/20**

(73) Titulaire: **SAGEM Défense Sécurité
75015 Paris (FR)**

(72) Inventeurs:
• **RIEDINGER, Didier**
  **F-75015 Paris (FR)**
• **CHAFOUK, Houcine**
  **F-76230 Bois Guillaume (FR)**

(74) Mandataire: **Regimbeau
20, rue de Chazelles
75847 Paris Cedex 17 (FR)**

(56) Documents cités:
    **EP-A1- 1 752 786      WO-A1-2008/040658**

• **CALL C ET AL: "Performance of Honeywell's Inertial/GPS Hybrid (HIGH) for RNP Operations" POSITION, LOCATION, AND NAVIGATION SYMPOSIUM, 2006 IEEE/ION CORONADO, CA APRIL 25-27, 2006, PISCATAWAY, NJ, USA,IEEE, 25 avril 2006 (2006-04-25), page 244, XP010924866 ISBN: 978-0-7803-9454-4**
• **VIEWEG S: "Integrity monitoring and failure identification within an integrated satellite/ inertial navigation system" POSITION LOCATION AND NAVIGATION SYMPOSIUM, 1994., IEEE LAS VEGAS, NV, USA 11-15 APRIL 1994, NEW YORK, NY, USA,IEEE, NEW YORK, NY, USA LNKD- DOI: 10.1109/PLANS.1994.303386, 11 avril 1994 (1994-04-11), pages 755-761, XP010117802 ISBN: 978-0-7803-1435-1**

**Description**

DOMAINE TECHNIQUE GENERAL

Le domaine de l'invention est celui des porteurs utilisant des informations fournies à la fois par une centrale inertielle et par un système de navigation par satellite, comme par exemple un système GPS.
L'invention concerne un procédé et un dispositif d'hybridation, et porte plus particulièrement sur la détection de pannes satellites et la correction de l'impact de telles pannes.

ETAT DE L'ART

Les porteurs comme les aéronefs ou encore les bateaux disposent de nombreux systèmes de navigation. Parmi ces systèmes, on compte notamment un équipement hybride INS/GNSS (de l'anglo-saxon « Inertial Navigation System » et « Global Navigation Satellite System »).
Une centrale inertielle fournit des informations peu bruitées et précises à court terme. Cependant, sur le long terme, les performances en localisation d'une centrale inertielle se dégradent (plus ou moins vite en fonction de la qualité des capteurs, accéléromètres ou gyroscopes par exemple, et des traitements utilisés par la centrale). Si les informations acquises auprès d'un système de navigation par satellites sont quant à elles très peu susceptibles de dériver sur le long terme, elles sont cependant souvent bruitées et d'une précision variable. Par ailleurs, les mesures inertielles sont toujours disponibles alors que les informations GNSS ne le sont pas ou sont susceptibles d'être leurrées et brouillées.
L'hybridation consiste à combiner les informations fournies par la centrale inertielle et les mesures fournies par le système de navigation par satellites pour obtenir des informations de position et de vitesse en tirant avantage des deux systèmes. Ainsi, la précision des mesures fournies par le récepteur GNSS permet de maîtriser la dérive inertielle et les mesures inertielles peu bruitées permettent de filtrer le bruit sur les mesures du récepteur GNSS.
Les systèmes de navigation modernes calculent des rayons de protection autour de la position calculée qui permettent de contenir l'erreur de position vraie à un risque d'intégrité donné, c'est ce qui définit l'intégrité d'un système.
Selon l'état de l'art, ces rayons de protection peuvent être calculés, par exemple, au moyen d'un banc de filtres de Kalman qui permet de se protéger contre la panne éventuelle d'un satellite.
Ces filtres réalisent l'hybridation entre les informations issues du système de navigation par satellite et celles issues de la centrale inertielle. Un des filtres du banc de filtres, désigné par le terme de filtre principal, utilise toutes les mesures GNSS constituées de pseudo-mesures et d'informations sur la qualité de celles-ci. Les autres filtres, dit secondaires, du banc de filtres ne font usage que d'une partie seulement des mesures GNSS disponibles. Si une panne survient au niveau d'une mesure satellite, celle-ci ne sera pas vue par le filtre secondaire ne recevant pas cette mesure : ce filtre secondaire restera donc non pollué.
L'utilisation d'un tel banc de filtres de Kalman a été proposée dans le document US 7,219,013. Selon ce document, les rayons de protection sont calculés à l'aide de la méthode de solution de séparation tandis que la détection et l'exclusion d'une panne satellite mettent en oeuvre une surveillance des résidus d'innovation des filtres de Kalman.
Toutefois, cette architecture ne permet pas d'isoler des pannes induites par des faibles dérives, de sorte qu'il s'y avère nécessaire de compléter la surveillance des résidus d'innovation par une méthode dite des moindres carrés utilisant uniquement des informations GNSS.
La demanderesse a développé des dispositifs utilisant un tel banc de filtre, dont un exemple est présenté dans sa demande de brevet n° FR 0858726 déposée le 17 décembre 2008.
L'architecture proposée dans cette demande présente un banc de filtres de Kalman, où chaque filtre est associé à un module de correction des mesures GNSS en entrée du filtre en fonction de sa sortie. La solution de navigation hybride est déterminée par une correction de l'état inertiel en fonction des sorties des filtres du banc de filtre.
Toutefois, l'architecture proposée dans ce document ne s'avère pas totalement satisfaisante. Si elle permet la détection d'une panne et l'exclusion des mesures en provenance du satellite en panne identifié, elle ne propose aucune solution pour évaluer l'impact de la panne sur la solution de navigation. En effet, la détection est basée sur un test statistique instantané qui ne se déclenche que lorsque la panne atteint un seuil de détection. Ainsi, même si le satellite en panne a été isolé, la solution de navigation ne peut être corrigée et une erreur résiduelle persiste provenant des données corrompues par la panne avant identification de celle-ci. De ce fait, le rayon de protection augmente significativement en cas de panne satellite, bien que celle-ci soit détectée.
En outre, de telles architectures ne permettent pas de distinguer la nature d'une panne, en particulier biais ou rampe, mais uniquement de déclarer la présence d'une de ces pannes.
De plus, aucun délai de détection n'est contraint, et rien n'indique que la solution hybride à un instant donné n'est pas corrompue par une panne qui sera prochainement détectée.
D'autres procédés de détermination de paramètres de navigation d'un porteur utilisant au moins un filtre de Kalman élaborant une solution de navigation hybride à partir de mesures inertielles et de mesures de signaux émis par une constellation de satellites sont également décrits dans EP1752786 et WO 20085/040658.

## PRESENTATION DE L'INVENTION

L'invention propose de pallier au moins un de ces inconvénients, et vise en particulier à réduire le rayon de protection en cas de panne satellite.

A cet effet, l'invention propose selon un premier aspect un procédé de détermination de paramètres de navigation d'un porteur par un dispositif d'hybridation comprenant un filtre de Kalman élaborant une solution de navigation hybride à partir de mesures inertielles calculées par une plateforme virtuelle et de mesures brutes de signaux émis par une constellations de satellites délivrés par un système de positionnement par satellites (GNSS), comprenant les étapes de :

- détermination, pour chaque satellite, d'au moins un rapport de vraisemblance entre une hypothèse de panne d'une nature donnée du satellite et une hypothèse d'absence de panne du satellite,
- déclaration, d'une panne de nature donnée sur un satellite en fonction du rapport de vraisemblance associé à cette panne et d'une valeur seuil,
- estimation de l'impact de la panne déclarée sur la solution de navigation hybride, et
- correction de la solution de navigation hybride en fonction de l'estimation de l'impact de la panne déclarée.

Le procédé selon le premier aspect de l'invention est avantageusement complété par les caractéristiques suivantes, prises seules ou en une quelconque de leurs combinaisons techniquement possibles :

- pour chaque satellite, au moins un rapport de vraisemblance est déterminé à chaque incrémentation du filtre de Kalman sur une fenêtre glissante de stockage, une panne de nature donnée étant déclarée si la somme des rapports de vraisemblance associés à cette panne est supérieure à la valeur seuil associée,
- le procédé comprend en outre, si une panne est déclarée, une étape d'exclusion des mesures brutes de signaux émis par le satellite déclaré en panne,
- le rapport de vraisemblance est déterminé en fonction d'un vecteur d'innovation et de covariances d'innovation fournies par le filtre de Kalman et à partir d'une estimation de l'impact de la panne de nature donnée sur ledit vecteur d'innovation,
- l'impact de la panne de nature donnée sur ladite innovation est estimé par détermination, à partir de données fournies par le filtre de Kalman, d'une matrice dynamique d'innovation, et estimation d'une amplitude de la panne de nature donnée sur une fenêtre glissante d'estimation correspondant à un nombre donné d'incrémentations du filtre de Kalman, la matrice dynamique d'innovation représentant un lien entre l'amplitude de la panne et l'écart induit par la panne sur l'innovation,
- le nombre donné d'incrémentations du filtre de Kalman correspond à une durée inférieure à un délai de détection prédéterminé,
- l'estimation de l'amplitude de la panne de nature donnée est effectuée sur la fenêtre glissante d'estimation par une méthode de minimisation aux moindres carrés,
- l'estimation de l'impact de la panne sur la solution de navigation hybride comprend une détermination, par le filtre de Kalman, d'une matrice dynamique de navigation, et une estimation d'une amplitude et d'une covariance de la panne de nature donnée sur une fenêtre glissante d'estimation correspondant à un nombre donné d'incrémentations du filtre de Kalman, la matrice dynamique de navigation représentant un lien entre l'amplitude de la panne et l'écart induit par la panne sur la solution de navigation hybride,
- deux rapports de vraisemblance sont déterminés pour chaque satellite, un rapport étant associé à une hypothèse de panne de nature biais et l'autre rapport étant associé à une hypothèse de panne de nature rampe,
- si une panne de nature biais est déclarée au cours de l'étape de déclaration, l'étape d'estimation de l'impact de la panne sur la solution de navigation hybride est réalisée sur une fenêtre glissante d'estimation à partir de l'instant de déclaration de la panne de nature biais,
- si une panne de nature rampe est déclarée, l'étape d'estimation de l'impact de la panne sur la solution de navigation hybride est réalisée sur la fenêtre glissante d'estimation précédent l'instant de déclaration de la panne de nature rampe, et
- si plusieurs sommes de rapports de vraisemblance sont supérieures à leur valeur seuil associée, une seule panne est déclarée au cours de l'étape de déclaration, ladite panne correspondant à la plus grande des sommes de rapports de vraisemblance.

L'invention propose selon un deuxième aspect un dispositif d'hybridation comprenant une plateforme virtuelle apte à calculer des mesures inertielles, un filtre de Kalman destiné à élaborer une solution de navigation hybride à partir des mesures inertielles et de mesures brutes de signaux émis par une constellations de satellites délivrés par un système de positionnement par satellites (GNSS), comprenant :

- un module de détection configuré pour déterminer, pour chaque satellite, au moins un rapport de vraisemblance entre une hypothèse de panne d'une nature donnée par rapport et une hypothèse d'absence de panne du satellite et pour déclarer une panne de nature donnée en fonction du rapport de vraisemblance associé à la panne de nature donnée et d'une valeur seuil,
- un module d'accommodation configuré pour estimer l'impact de la panne déclarée sur la solution de navigation hybride élaborée par le filtre de Kalman, et pour corriger la solution de navigation hybride en fonction de l'estimation de l'impact de la panne déclarée.

Le dispositif selon le deuxième aspect de l'invention est avantageusement complété par un dispositif de gestion des signaux satellites configuré pour exclure des mesures brutes de signaux émis par tout satellite déclaré en panne par le module de détection.

L'invention présente de nombreux avantages.

L'invention permet en particulier d'estimer les impacts d'une panne sur la solution de navigation hybride et de la corriger.

L'invention permet de détecter les dérives lentes par des tests statistiques sur une fenêtre glissante.

L'invention permet en outre de différentier une détection de panne de nature biais et de panne de nature rampe, et d'appliquer une correction en conséquence.

De plus, l'invention favorise la détection de pannes dans un délai inférieur à un délai de détection prédéterminé.

PRESENTATION DES FIGURES

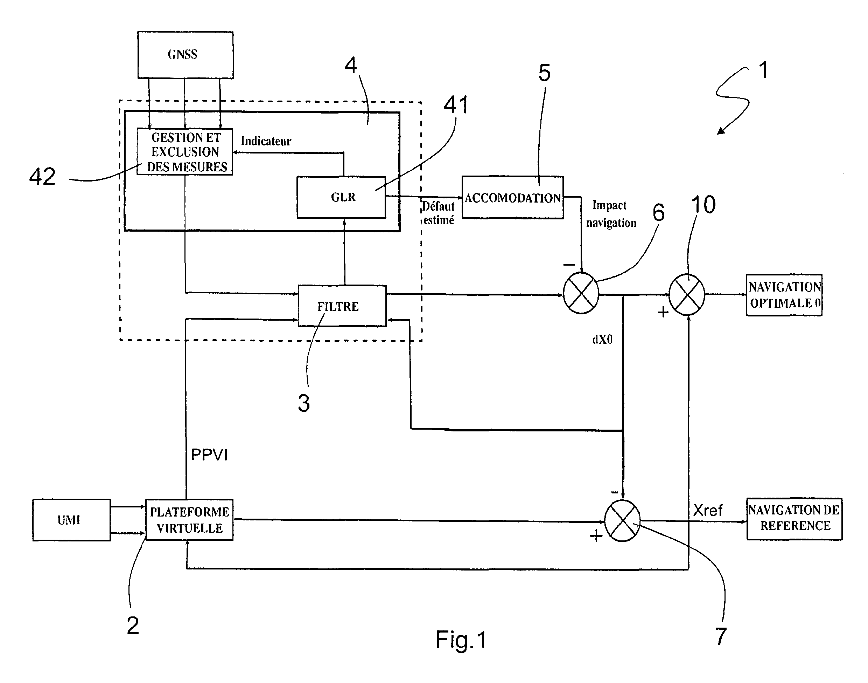

D'autres aspects, buts et avantages de la présente invention apparaîtront mieux à la lecture de la description détaillée suivante de formes de réalisation préférées de celle-ci, donnée à titre d'exemple non limitatif, et faite en référence à la figure 1 annexée, laquelle est un schéma illustrant un mode de réalisation possible d'un dispositif selon le second aspect de l'invention.

DESCRIPTION DETAILLEE

En référence à la figure 1, on a représenté un dispositif d'hybridation 1 conforme à un mode de réalisation possible du second aspect de l'invention, destiné à être embarqué au sein d'un porteur tel qu'un aéronef. Le dispositif d'hybridation 1 utilise des informations fournies par une centrale inertielle UMI et par un système de navigation par satellites GNSS, et comprend une plateforme virtuelle 2 et un filtre de Kalman 3.

La plateforme virtuelle 2 reçoit des incréments inertiels provenant des capteurs (gyroscopes, accéléromètres) de la centrale inertielle. Les incréments inertiels correspondent notamment à des incréments angulaires et à des incréments de vitesse. Des informations de navigation inertielle (comme les attitudes, la vitesse ou la position du porteur) sont calculées par la plateforme virtuelle 2 à partir de ces incréments. Ces informations de navigation inertielle sont désignées mesures inertielles PPVI par la suite.

Ces mesures inertielles PPVI sont transmises à un dispositif de calcul des pseudo-distances estimées a priori (non représenté sur la figure 1) qui reçoit également des données sur la position des satellites. A partir d'une part des mesures inertielles et d'autres par des données sur la position des satellites, le dispositif de calcul des pseudo-distances estimées a priori calcule les pseudo-distances a priori entre le porteur et les différents satellites visibles du porteur. Le dispositif d'hybridation 1 reçoit également du système de navigation par satellite GNSS les pseudo-mesures entre le porteur et les différents satellites visibles. On calcule alors classiquement les écarts (appelées observations) entre les pseudo-mesures estimées a priori et les pseudo-mesures délivrées par le système GNSS.

Le dispositif d'hybridation 1 comporte en outre un filtre de Kalman 3 réalisant l'hybridation entre les informations inertielles provenant de la centrale inertielle et les informations du système de navigation par satellite. Outre une fonction de fourniture d'informations statistiques sur les mesures en sortie, le rôle du filtre est de maintenir la plateforme virtuelle 2 dans un domaine de fonctionnement linéaire image de celui modélisé dans le filtre de Kalman 3 en estimant un vecteur d'états dX0.

Le filtre de Kalman 3 prend en compte toutes les observations (et reçoit pour ce faire toutes les mesures issues du système GNSS) et élabore une solution de navigation hybride.

Dans le cadre de l'architecture en boucle fermée représentée sur la figure 1, le dispositif d'hybridation 1 élabore une sortie hybride Xref (« Navigation de référence ») correspondant aux mesures inertielles PPVI calculées par la plateforme virtuelle 2 et corrigées, via un soustracteur 7, par un vecteur d'état dX0 élaboré par le filtre de Kalman.

L'invention n'est toutefois pas limitée à une telle architecture, mais s'étend à une architecture en boucle ouverte dans laquelle le soustracteur 7 n'est pas activé.

Afin d'élaborer la solution de navigation hybride, le dispositif 1 comporte un sommateur 10 positionné en sortie du filtre de Kalman 3 pour ajouter au vecteur d'état dX0 élaboré par le filtre la sortie hybride Xref.

On relèvera que la sortie hybride Xref sert uniquement en interne. Ce sont ainsi les informations délivrées en sortie du sommateur 10 qui fournissent la solution de navigation optimale.

La sortie hybride Xref peut être rebouclée à l'entrée de la plateforme virtuelle 2.

Par ailleurs, comme cela est représenté sur la figure 1, le vecteur de stabilisation d'état dX0 peut être appliqué à l'entrée du filtre de Kalman 3. De cette manière, le filtre est maintenu cohérent de la plateforme virtuelle 2.

Dans ce qui suit, on définit un satellite en panne comme étant un satellite qui envoie des informations erronées dans son message, conduisant à un écart (fixe ou variable) entre sa position réelle et la position donnée dans son message.

Le dispositif d'hybridation 1 selon l'invention comporte un module 4 de détection et d'exclusion de pannes satellites comprenant un module 41 de détection configuré de manière à mettre en oeuvre les étapes de :

- détermination, pour chaque satellite, d'au moins un rapport Ir, Ir' de vraisemblance entre une hypothèse de panne d'une nature donnée du satellite et une hypothèse d'absence de panne du satellite,
- déclaration, d'une panne de nature donnée sur un satellite en fonction du rapport Ir, Ir' de vraisemblance associé à cette panne et d'une valeur seuil.

Un rapport de vraisemblance est représentatif de la probabilité que la panne de nature donnée qui lui est associée affecte le satellite correspondant. Par exemple, si un rapport de vraisemblance associé à une panne de nature donnée est positif, il est plus probable que ladite panne affecte le satellite correspondant. Plus un rapport de vraisemblance est élevé, plus la probabilité est grande que son satellite correspondant soit corrompu par la panne qui lui est associé.

Avantageusement, pour chaque satellite, au moins un rapport Ir, Ir' de vraisemblance est déterminé à chaque incrémentation du filtre de Kalman sur une fenêtre glissante de stockage, et une panne de nature donnée est déclarée si la somme des rapports de vraisemblance Ir, Ir' associés à cette panne sur la fenêtre glissante est supérieure à la valeur seuil associée.

La valeur seuil peut être la même pour plusieurs satellites et/ou pour plusieurs natures de panne, ou bien les valeurs seuils peuvent être différentes pour chaque satellite et pour chaque nature de panne, auquel cas chaque rapport de vraisemblance ou avantageusement chaque somme de rapports de vraisemblance peut est comparé à une valeur seuil qui lui est propre.

La taille de la fenêtre glissante de stockage peut varier en fonction de la nature de la panne, ou bien une seule taille de fenêtre glissante peut être prévue.

Comme cela sera détaillé par la suite, le module 4 de détection et d'exclusion de pannes satellites met également en oeuvre une fonction de gestion et d'exclusion des mesures GNSS pour les surveiller.

Dans le mode de réalisation représenté sur la figure 1, le module 4 de détection et d'exclusion comprend en outre un module 42 de gestion des signaux satellites qui reçoit les mesures GNSS et route ces informations vers le filtre de Kalman 3 en fonction des circonstances (aucun satellite détecté comme étant défaillant ; exclusion d'un satellite détecté comme étant défaillant).

Le dispositif d'hybridation selon le deuxième aspect de l'invention comprend encore un module 5 d'accommodation destiné à mettre en oeuvre les étapes de :

- estimation de l'impact d'une panne sur la solution de navigation hybride élaborée par le filtre de Kalman 3, et
- si une panne est déclarée, correction de la solution de navigation hybride en fonction de l'estimation de l'impact de la panne.

Le module 5 d'accommodation a ainsi pour fonction d'évaluer l'écart induit par une panne sur la solution de navigation hybride et de corriger la solution de navigation hybride, par exemple à l'aide d'un soustracteur 6. L'invention n'est cependant pas limitée à cette architecture et l'estimation de l'impact de la panne sur la solution de navigation hybride peut être réalisée de manière alternative par le filtre de Kalman, par le module 41 de détection, ou encore par tout autre moyen adapté connu de l'homme de l'art.

On va maintenant décrire des méthodes de calcul développées par la Demanderesse pour déterminer les rapports de vraisemblance et l'impact d'une panne sur la solution de navigation hybride. Ces formules sont données à titre illustratif et ne constituent en rien une limitation de l'invention.

Avantageusement, une entrée du module 41 de détection est reliée à une sortie du filtre de Kalman, et les rapports de vraisemblance sont déterminés en fonction de données fournies par le filtre de Kalman comprenant en particulier un vecteur d'innovation et des covariances d'innovation, et à partir d'un vecteur d'estimation de l'impact de la panne de nature donnée sur le vecteur d'innovation.

On entend par innovation un écart entre une observation à priori fournie au filtre de Kalman et une estimation à posteriori de cette observation élaborée par le filtre.

Le vecteur d'innovation représente ainsi une innovation sur les observations obtenues par plusieurs satellites.

Préférentiellement, le rapport de vraisemblance lr associé à une panne de nature donnée est déterminé, à un instant t donné, par la formule suivante :

$$ lr_t = \varepsilon_t{}^T S_t{}^{-1} \varepsilon_t - (\varepsilon_t - \rho_t)^T S_t{}^{-1} (\varepsilon_t - \rho_t) $$

dans laquelle :

- $\varepsilon_t$ représente le vecteur d'innovation du filtre de Kalman à l'instant t
- $S_t$ représente les covariances des innovations à l'instant t, et
- $\rho_t$ représente l'écart dû à la panne sur le vecteur d'innovation à l'instant t.
- $^T$ représente la transposition d'une matrice ou d'un vecteur colonne.

$\rho_t$ est inconnu, mais on peut l'estimer sur une fenêtre glissante d'estimation. Préférentiellement, on estime en parallèle l'écart dû à la panne sur la solution hybride de navigation, écart que l'on notera $\beta$, dans la suite. Ces estimations peuvent être mises en oeuvre selon les formules suivantes :

$$ \rho_t = \varphi_t{}^T \hat{\upsilon}_t $$

$$ \beta_t = \mu_t{}^T \hat{\upsilon}_t $$

dans lesquelles :

- $\hat{\upsilon}_t$ est une estimation de l'amplitude de la panne,
- $\varphi_t$ est une matrice dynamique d'innovation, représentant un lien entre l'amplitude de la panne et l'écart induit par la panne sur l'innovation, et
- $\mu_t$ est une matrice dynamique de navigation, représentant un lien entre l'amplitude de la panne et l'écart induit par la panne sur la solution hybride de navigation.

Les deux matrice dynamiques à l'instant t sont avantageusement calculées par le module 41 de détection à partir de données fournies par le filtre de Kalman, préférentiellement de manière récursive croisée, c'est-à-dire que, pour tout instant t, $\varphi_t$ et $\mu_t$, sont calculées en fonction de $\varphi_{t-1}$ et $\mu_{t-1}$.

Lesdites données fournies par le filtre 3 de Kalman peuvent comprendre un gain de Kalman, et des matrices de transition et d'observation.

L'estimation de l'amplitude de la panne est avantageusement effectuée sur une fenêtre glissante d'estimation correspondant à un nombre donné N d'incrémentations du filtre de Kalman.

Selon une variante avantageuse, l'estimation peut être réalisée par une estimation aux moindres carrés sur la fenêtre glissante d'estimation, préférentiellement par la formule suivante :

$$ \hat{\upsilon}_t = \left( \sum_{i=t-N+1}^{t} \varphi_i S_i{}^{-1} \varphi_i{}^T \right)^{-1} . \left( \sum_{i=t-N+1}^{t} \varphi_i S_i{}^{-1} \varepsilon_i \right) $$

Avantageusement, le nombre donné N d'incrémentations du filtre de Kalman correspond à une durée inférieure à un délai de détection T prédéterminé. En particulier, en notant $\delta$ la période d'incrémentation du filtre de Kalman 3, la fenêtre glissante d'estimation doit vérifier : $N.\delta \le T$.

Cette fenêtre glissante d'estimation est avantageusement la même que la fenêtre glissante de stockage des rapports de vraisemblance associée à la panne.

Ce délai de détection permet de contraindre la taille de la fenêtre glissante et ainsi de limiter la charge de calcul.

Préférentiellement, le module 41 de détection est apte à stocker les rapports de vraisemblance de chaque satellite et pour chaque panne de nature donnée sur la fenêtre glissante de stockage.

Selon une variante avantageuse, deux rapports Ir, Ir' de vraisemblance sont déterminés pour chaque satellite, un rapport Ir étant associé à une hypothèse de panne de nature biais et l'autre rapport Ir' étant associé à une hypothèse de panne de nature rampe.

En particulier, la matrice dynamique d'innovation déterminée pour chaque incrémentation du filtre de Kalman est différente pour une panne de nature biais ou rampe. Pour chaque satellite, les deux rapports Ir, Ir' de vraisemblance sont donc différents.

L'invention permet ainsi de différencier l'occurrence d'une panne de nature biais ou bien d'une panne de nature rampe.

Si une panne de nature biais est détectée, l'étape d'estimation de l'impact de la panne sur la solution de navigation hybride est avantageusement réalisée sur une fenêtre glissante d'estimation à partir de l'instant de déclaration de la panne de nature biais. Ainsi, si une panne de type biais est détectée, on laisse active la fenêtre glissante d'estimation pendant un temps déterminé, suffisant pour estimer les caractéristiques de la panne.

Avantageusement, l'estimation des caractéristiques de la panne de type biais est fonction de l'instant d'apparition de la panne, c'est-à-dire de l'instant où la somme des rapports de vraisemblance sur la fenêtre glissante de stockage associée à la panne de type biais a dépassé sa valeur seuil associée. L'exclusion des mesures par le dispositif 42 n'est alors implémentée qu'après cette estimation.

Si une panne de type rampe est détectée, l'estimation de l'impact de la panne sur la solution de navigation hybride est préférentiellement réalisée sur la fenêtre glissante d'estimation précédent l'instant de déclaration de la panne de nature rampe.

Avantageusement, si plusieurs sommes de rapports Ir, Ir' de vraisemblance sont supérieures à leur valeur seuil associée, une seule panne est déclarée par le module 41 de détection. Cette panne correspond à la plus grande des sommes de rapports de vraisemblance pour l'ensemble des pannes envisagées sur l'ensemble des satellites.

Ainsi, si deux satellites sont susceptibles d'être déclarés en panne, seule la panne la plus probable est effectivement déclarée et si deux pannes de nature différentes sont susceptibles d'être déclarées, seule la panne la plus probable est effectivement déclarée.

**Revendications**

1. Procédé de détermination de paramètres de navigation d'un porteur par un dispositif d'hybridation comprenant un filtre de Kalman (3) élaborant une solution de navigation hybride à partir de mesures inertielles calculées par une plateforme virtuelle (2) et de mesures brutes de signaux émis par une constellations de satellites délivrés par un système de positionnement par satellites (GNSS), comprenant les étapes de :

   - détermination, pour chaque satellite, d'au moins un rapport (Ir, Ir') de vraisemblance entre une hypothèse de panne d'une nature donnée du satellite et une hypothèse d'absence de panne du satellite,
   - déclaration, d'une panne de nature donnée sur un satellite en fonction du rapport (Ir, Ir') de vraisemblance associé à cette panne et d'une valeur seuil,

   **caractérisé en ce qu'**il comprend, en outre, les étapes de :

   - estimation de l'impact de la panne déclarée sur la solution de navigation hybride, et
   - correction de la solution de navigation hybride en fonction de l'estimation de l'impact de la panne déclarée.

2. Procédé selon la revendication précédente, dans lequel, pour chaque satellite, au moins un rapport (Ir, Ir') de vraisemblance est déterminé à chaque incrémentation du filtre de Kalman sur une fenêtre glissante de stockage, une panne de nature donnée étant déclarée si la somme des rapports de vraisemblance (Ir, Ir') associés à cette panne est supérieure à la valeur seuil associée.

3. Procédé selon la revendication précédente, comprenant en outre, si une panne est déclarée, une étape d'exclusion des mesures brutes de signaux émis par le satellite déclaré en panne.

4. Procédé selon l'une des revendications précédentes, dans lequel le rapport (Ir, Ir') de vraisemblance est déterminé en fonction d'un vecteur d'innovation et de covariances d'innovation fournies par le filtre de Kalman et à partir d'une estimation de l'impact de la panne de nature donnée sur ledit vecteur d'innovation.

5. Procédé selon la revendication précédente, dans lequel l'impact de la panne de nature donnée sur ladite innovation est estimé par détermination, à partir de données fournies par le filtre de Kalman (3), d'une matrice dynamique d'innovation, et estimation d'une amplitude de la panne de nature donnée sur une fenêtre glissante d'estimation correspondant à un nombre donné (N) d'incrémentations du filtre de Kalman (3), la matrice dynamique d'innovation représentant un lien entre l'amplitude de la panne et l'écart induit par la panne sur l'innovation.

6. Procédé selon la revendication précédente, dans lequel le nombre donné (N) d'incrémentations du filtre de Kalman (3) correspond à une durée inférieure à un délai de détection prédéterminé (T).

7. Procédé selon les revendications 5 et 6, dans lequel l'estimation de l'amplitude de la panne de nature donnée est effectuée sur la fenêtre glissante d'estimation par une méthode de minimisation aux moindres carrés.

8. Procédé selon l'une des revendications précédentes, dans lequel l'estimation de l'impact de la panne sur la solution de navigation hybride comprend une détermination, par le filtre de Kalman (3), d'une matrice dynamique de navigation, et une estimation d'une amplitude et d'une covariance de la panne de nature donnée sur une fenêtre glissante d'estimation correspondant à un nombre donné (N) d'incrémentations du filtre de Kalman, la matrice dynamique de navigation représentant un lien entre l'amplitude de la panne et l'écart induit par la panne sur la solution de navigation hybride.

9. Procédé selon l'une des revendications précédentes, dans lequel deux rapports (Ir, Ir') de vraisemblance sont déterminés pour chaque satellite, un rapport (Ir) étant associé à une hypothèse de panne de nature biais et l'autre rapport (Ir') étant associé à une hypothèse de panne de nature rampe.

10. Procédé selon les revendications 8 et 9, dans lequel, si une panne de nature biais est déclarée au cours de l'étape de déclaration, l'étape d'estimation de l'impact de la panne sur la solution de navigation hybride est réalisée sur une fenêtre glissante d'estimation à partir de l'instant de déclaration de la panne de nature biais.

11. Procédé selon les revendications 8 et 9, dans lequel, si une panne de nature rampe est déclarée, l'étape d'estimation de l'impact de la panne sur la solution de navigation hybride est réalisée sur la fenêtre glissante d'estimation précédent l'instant de déclaration de la panne de nature rampe.

12. Procédé selon l'une des revendications 2 à 11, dans lequel, si plusieurs sommes de rapports (Ir, Ir') de vraisemblance sont supérieures à leur valeur seuil associée, une seule panne est déclarée au cours de l'étape de déclaration, ladite panne correspondant à la plus grande des sommes de rapports de vraisemblance.

13. Dispositif d'hybridation comprenant une plateforme virtuelle (2) apte à calculer des mesures inertielles, un filtre de Kalman (3) destiné à élaborer une solution de navigation hybride à partir des mesures inertielles et de mesures brutes de signaux émis par une constellation de satellites délivrés par un système de positionnement par satellites (GNSS), comprenant:

   - un module (41) de détection configuré pour déterminer, pour chaque satellite, au moins un rapport (Ir, Ir') de vraisemblance entre une hypothèse de panne d'une nature donnée et une hypothèse d'absence de panne du satellite et pour déclarer une panne de nature donnée en fonction du rapport de vraisemblance (Ir, Ir') associé à la panne de nature donnée et d'une valeur seuil, **caractérisé en ce qu'**il comprend, en outre :

      - un module (5) d'accommodation configuré pour estimer l'impact de la panne déclarée sur la solution de navigation hybride élaborée par le filtre de Kalman, et pour corriger la solution de navigation hybride en fonction de l'estimation de l'impact de la panne déclarée.

14. Dispositif selon la revendication précédente, comprenant en outre, un dispositif (42) de gestion des signaux satellites configuré pour exclure des mesures brutes de signaux émis par tout satellite déclaré en panne par le module de détection.

**Patentansprüche**

1. Verfahren zum Bestimmen von Navigationsparametern für einen Träger über eine Hybridisierungsvorrichtung, enthaltend ein Kalman-Filter (3), das eine Hybrid-Navigationslösung ausgehend von Trägheitsmessungen, die über eine virtuelle Plattform (2) errechnet werden, und von Rohmessungen von Signalen ausarbeitet, die von einer Konstellation von Satelliten ausgesendet werden, die von einem Satellitenpositionierungssystem (GNSS) bereitgestellt werden, das die nachfolgenden Schritte umfasst:

- Ermittlung von zumindest einem Wahrscheinlichkeitsverhältnis (lr, lr') zwischen einer möglichen Satellitenstörung gegebener Art und einem möglichen Ausbleiben einer Satellitenstörung, für jeden Satelliten,
- Meldung einer Störung gegebener Art bei einem Satelliten in Abhängigkeit von dem Wahrscheinlichkeitsverhältnis (lr, lr'), das dieser Störung zugeordnet ist, und einem Schwellenwert,

**dadurch gekennzeichnet, dass** es ferner die folgenden Schritte umfasst:

- Schätzung der Auswirkung der gemeldeten Störung auf die Hybrid-Navigationslösung, und
- Korrektur der Hybrid-Navigationslösung in Abhängigkeit von der Schätzung der Auswirkung der gemeldeten Störung.

2. Verfahren nach dem vorangehenden Anspruch, wobei für jeden Satelliten zumindest ein Wahrscheinlichkeitsverhältnis (lr, lr') bei jeder Inkrementierung des Kalman-Filters an einem gleitenden Speicherfenster ermittelt wird, wobei eine Störung gegebener Art dann gemeldet wird, wenn die Summe der dieser Störung zugeordneten Wahrscheinlichkeitsverhältnisse (lr, lr') höher als der zugeordnete Schwellwert ist.

3. Verfahren nach dem vorangehenden Anspruch, wobei es bei einer gemeldeten Störung ferner einen Schritt zum Ausschließen von Rohmessungen der Signale umfasst, die über den störungsbehaftet gemeldeten Satelliten ausgegeben werden.

4. Verfahren nach einem der vorangehenden Ansprüche, wobei das Wahrscheinlichkeitsverhältnis (lr, lr') in Abhängigkeit von einem Innovationsvektor und von Innovationskovarianzen ermittelt wird, die von dem Kalman-Filter bereitgestellt werden, sowie von einer Schätzung der Auswirkung der Störung gegebener Art auf den Innovationsvektor.

5. Verfahren nach dem vorangehenden Anspruch, wobei die Auswirkung der Störung gegebener Art auf die Innovation durch Ermittlung einer dynamischen Innovationsmatrix ausgehend von Daten, die von dem Kalman-Filter (3) bereitgestellt werden, und durch Schätzung einer Größe der Störung gegebener Art an einem gleitenden Schätzfenster geschätzt wird, das einer gegebenen Anzahl (N) von Inkrementierungen des Kalman-Filters (3) entspricht, wobei die dynamische Innovationsmatrix einen Zusammenhang zwischen der Größe der Störung und der von der Störung auf die Innovation induzierten Abweichung darstellt.

6. Verfahren nach dem vorangehenden Anspruch, wobei die gegebene Anzahl (N) an Inkrementierungen des Kalman-Filters (3) einer Zeitdauer entspricht, die unter einer vorbestimmten Erfassungszeit (T) liegt.

7. Verfahren nach den Ansprüchen 5 und 6, wobei die Schätzung der Größe der Störung gegebener Art an dem gleitenden Schätzfenster durch eine Methode der Minimierung auf die kleinsten Quadrate erfolgt.

8. Verfahren nach einem der vorangehenden Ansprüche, wobei die Schätzung der Auswirkung der Störung auf die Hybrid-Navigationslösung eine Ermittlung einer dynamischen Navigationsmatrix durch das Kalman-Filter (3) und eine Schätzung einer Größe und einer Kovarianz der Störung gegebener Art auf ein gleitendes Schätzfenster umfasst, das einer gegebenen Anzahl (N) von Inkrementierungen des Kalman-Filters entspricht, wobei die dynamische Navigationsmatrix einen Zusammenhang zwischen der Größe der Störung und der von der Störung auf die Hybrid-Navigationslösung induzierten Abweichung darstellt.

9. Verfahren nach einem der vorangehenden Ansprüche, wobei für jeden Satelliten zwei Wahrscheinlichkeitsverhältnisse (lr, lr') ermittelt werden, wobei ein Verhältnis (lr) einer möglichen Störung schief verlaufender Art zugeordnet ist und das andere Verhältnis (lr') einer möglichen Störung rampenförmig verlaufender Art zugeordnet ist.

10. Verfahren nach den Ansprüchen 8 und 9, wobei in dem Falle, dass eine Störung von schief verlaufender Art im Laufe des Schrittes der Meldung gemeldet wird, der Schritt der Schätzung der Auswirkung der Störung auf die Hybrid-Navigationslösung an einem gleitenden Schätzungsfenster ausgehend von dem Zeitpunkt der Meldung der Störung von schief verlaufender Art erfolgt.

11. Verfahren nach den Ansprüchen 8 und 9, wobei in dem Falle, dass eine Störung von rampenförmig verlaufender Art gemeldet wird, der Schritt der Schätzung der Auswirkung der Störung auf die Hybrid-Navigationslösung an dem gleitenden Schätzungsfenster erfolgt, das dem Zeitpunkt der Meldung der Störung von rampenförmig verlaufender Art vorausgeht.

**12.** Verfahren nach einem der Ansprüche 2 bis 11, wobei im Falle von mehreren Summen der Wahrscheinlichkeitsverhältnisse (lr, lr'), die höher als der zugeordnete Schwellwert sind, im Laufe des Schritts der Meldung eine einzige Störung gemeldet wird, wobei die Störung der größeren Summe aus den Summen von Wahrscheinlichkeitsverhältnissen entspricht.

**13.** Hybridisierungsvorrichtung, enthaltend eine virtuelle Plattform (2), die geeignet ist, Trägheitsmessungen zu berechnen, ein Kalman-Filter (3), das dazu bestimmt ist, eine Hybrid-Navigationslösung ausgehend von den Trägheitsmessungen und von Rohmessungen von Signalen zu erarbeiten, die von einer Konstellation von Satelliten ausgesendet werden, die von einem Satellitenpositionierungssystem (GNSS) bereitgestellt werden, enthaltend:

- ein Erfassungsmodul (41), das so konfiguriert ist, dass es für jeden Satelliten zumindest ein Wahrscheinlichkeitsverhältnis (lr, lr') zwischen einer möglichen Störung gegebener Art und einem möglichen Ausbleiben einer Satellitenstörung ermittelt und eine Störung gegebener Art in Abhängigkeit von dem Wahrscheinlichkeitsverhältnis (lr, lr'), das dieser Störung gegebener Art zugeordnet ist, und einem Schwellenwert meldet,

**dadurch gekennzeichnet, dass** sie ferner aufweist:

- ein Modul (5) zur Akkommodation, das dazu konfiguriert ist, die Auswirkung der gemeldeten Störung auf die Hybrid-Navigationslösung zu schätzen, die von dem Kalman-Filter ausgearbeitet wurde, und die Hybrid-Navigationslösung in Abhängigkeit von der Schätzung der Auswirkung der gemeldeten Störung zu korrigieren.

**14.** Vorrichtung nach dem vorangehenden Anspruch, ferner enthaltend eine Vorrichtung (42) zur Steuerung der Satellitensignale, die konfiguriert ist, um Rohmessungen von Signalen auszuschließen, die von jeglichem, von dem Erfassungsmodul als störungsbehaftet gemeldeten Satelliten ausgegeben werden.

## Claims

**1.** A process for determination of navigation parameters of a carrier by a hybridisation device comprising a Kalman filter (3) working out a hybrid navigation solution from inertial measurements calculated by a virtual platform (2) and raw measurements of signals emitted by constellations of satellites delivered by a satellite-positioning system (GNSS), comprising the steps of:

- determination for each satellite of at least one (Ir, Ir') probability ratio between a hypothetical breakdown of a given type of the satellite and a hypothetical absence of breakdown of the satellite,
- declaration of a breakdown of given type on a satellite as a function of the (Ir, Ir') probability ratio associated with this breakdown and a threshold value, **characterised in that** it comprises the steps of:
- estimation of the impact of the declared breakdown on the hybrid navigation solution, and
- correction of the hybrid navigation solution as a function of the estimation of the impact of the declared breakdown.

**2.** The process as claimed in the preceding claim, in which for each satellite at least one (Ir, Ir') probability ratio is determined at each incrementation of the Kalman filter on a sliding storage window, a breakdown of given type being declared if the sum of the (Ir, Ir') probability ratios associated with this breakdown is greater than the associated threshold value.

**3.** The process as claimed in the preceding claim, also comprising, if a breakdown is declared, a step of exclusion of raw measurements of signals emitted by the satellite declared in breakdown.

**4.** The process as claimed in any one of the preceding claims, in which the (Ir, Ir') probability ratio is determined as a function of an innovation vector and of innovation covariances provided by the Kalman filter and from estimation of the impact of the breakdown of given type on said innovation vector.

**5.** The process as claimed in the preceding claim, in which the impact of the breakdown of given type on said innovation is estimated by determination, from data provided by the Kalman filter (3), of a dynamic innovation matrix, and estimation of the amplitude of the breakdown of given type on a sliding estimation window corresponding to a given number (N) of incrementations of the Kalman filter (3), the dynamic innovation matrix representing a link between the amplitude of the breakdown and the spread caused by the breakdown on the innovation.

6. The process as claimed in the preceding claim, in which the given number (N) of incrementations of the Kalman filter (3) corresponds to a duration lasting less than a predetermined detection period (T).

7. The process as claimed in Claims 5 and 6, in which the estimation of the amplitude of the breakdown of given type is done on the sliding estimation window by a minimisation method by the least-squares method.

8. The process as claimed in any one of the preceding claims, in which the estimation of the impact of the breakdown on the hybrid navigation solution comprises determination, by the Kalman filter (3), of a dynamic navigation matrix, and estimation of an amplitude and a covariance of the breakdown of given type on a sliding estimation window corresponding to a given number (N) of incrementations of the Kalman filter, the dynamic navigation matrix representing a link between the amplitude of the breakdown and the spread caused by the breakdown on the hybrid navigation solution.

9. The process as claimed in any one of the preceding claims, in which two (Ir, Ir') probability ratios are determined for each satellite, a (Ir) ratio being associated with a hypothetical breakdown of bias type and the other ratio (Ir') being associated with a hypothetical breakdown of ramp type.

10. The process as claimed in Claims 8 and 9, in which, if a breakdown of bias type is declared during the declaration step, the estimation step of the impact of the breakdown on the hybrid navigation solution is conducted on a sliding estimation window from the moment of declaration of the breakdown of bias type.

11. The process as claimed in Claims 8 and 9, in which, if a breakdown of ramp type is declared, the estimation step of the impact of the breakdown on the hybrid navigation solution is conducted on the sliding estimation window preceding the moment of declaration of the breakdown of ramp type.

12. The process as claimed in any one of Claims 2 to 11 , in which, if several sums of (Ir, Ir') probability ratios are greater than their associated threshold value, a single breakdown is declared during the declaration step, said breakdown corresponding to the greater of the sums of probability ratios.

13. A hybridisation device comprising a virtual platform (2) capable of calculating inertial measurements, a Kalman filter (3) designed to devise a hybrid navigation solution from inertial measurements and raw measurements of signals emitted by a constellation of satellites delivered by a satellitepositioning system (GNSS), comprising:

   - a detection module (41) configured to determine for each satellite at least one (Ir, Ir') probability ratio between a hypothetical breakdown of a given type and hypothetical absence of breakdown of the satellite and to declare a breakdown of given type as a function of the (Ir, Ir') probability ratio associated with the breakdown of given type is of a threshold value, **characterised in that** it further comprises:
   - an accommodation module (5) configured to estimate the impact of the declared breakdown on the hybrid navigation solution devised by the Kalman filter, and to correct the hybrid navigation solution as a function of the estimation of the impact of the declared breakdown.

14. The device as claimed in the preceding claim, also comprising a device (42) for managing satellite signals configured to exclude raw measurements of signals emitted by any satellite declared in breakdown by the detection module.

Fig.1

EP 2 452 157 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7219013 B
- FR 0858726
- EP 1752786 A
- WO 20085040658 A